# EUROPÄISCHE PATENTSCHRIFT

(11) **EP 2 908 923 B1**
(45) Veröffentlichungstag und Bekanntmachung des Hinweises auf die Patenterteilung: **07.08.2019**
(21) Anmeldenummer: 13780066.0
(22) Anmeldetag: 11.10.2013
(51) Int. Cl.: B01D 29/15, B01D 29/21

(54) **FILTERVORRICHTUNG**
FILTER DEVICE
DISPOSITIF FILTRE

(30) Priorität: 18.10.2012 DE 102012020431
(43) Veröffentlichungstag der Anmeldung: 26.08.2015
(73) Patentinhaber: Hydac Filtertechnik GmbH, 66280 Sulzbach/Saar (DE)
(72) Erfinder: SAKRASCHINSKY, Michael, 66386 St. Ingbert (DE); FIEDLER, Sebastian, 66583 Spiesen-Elversberg (DE)
(74) Vertreter: Bartels und Partner, Patentanwälte
(86) Internationale Anmeldenummer: PCT/EP2013/003069
(87) Internationale Veröffentlichungsnummer: WO 2014/060084

(56) Entgegenhaltungen:
- EP-A1- 1 360 983
- EP-A1- 2 228 113
- WO-A1-2010/139706
- WO-A1-2012/007337
- WO-A1-2013/178336
- WO-A1-2013/178352
- DE-A1- 2 121 533
- DE-A1- 2 915 730
- DE-A1-102006 003 551
- DE-A1-102009 009 899
- DE-A1-102010 061 222
- US-A1- 2005 161 394
- US-A1- 2012 248 024

## Beschreibung

Die Erfindung betrifft eine Filtervorrichtung mit den Merkmalen im Oberbegriff von Anspruch 1.

Filtervorrichtungen mit mindestens einem in einem Gehäuse aufnehmbaren Filterelement, das mit einem entsprechenden Systemdruck oder Fluidbetriebsdruck durchströmbar ist, sind handelsüblich und finden beispielsweise bei Hydraulikanlagen in von Hydrauliköl durchströmten Systemzweigen verbreitete Anwendung. Zur druckstabilen Ausbildung des jeweiligen Filterelements ist in der Regel vorgesehen, dass ein Stützrohr, vorzugsweise aus Kunststoffmaterial, vorgesehen ist, welches mit Perforationen versehen die Abstützung des eingesetzten Filtermaterials entgegen der vorgegebenen Durchströmungsrichtung des Fluids vornimmt. Bei einer aus DE 10 2008 004 344 A1 bekannten Filtervorrichtung ist das Filtermaterial als plissierte Filtermatte um ein fluiddurchlässiges Stützrohr gelegt, und das jeweilige Filterelement ist mit Endkappen versehen.

Im Betrieb einer Filtervorrichtung, insbesondere in Hydrauliksystemen, kann es je nach Anwendung zu stärkeren Druckpulsationen oder Druckspitzen kommen. Folglich kann der lokal am jeweiligen Filterelement herrschende Fluiddruck vom vorgegebenen Fluidbetriebsdruck derart abweichen, insbesondere diesen derart übersteigen, dass es zu Schädigungen am jeweiligen Filterelement, insbesondere dem eingesetzten Filtermaterial, kommen kann. Derartige Druckpulsationen treten insbesondere in Hydrauliksystemen mit schnell schließenden Ventilen oder mit Kolbenpumpen auf. Bei solchen Druckpulsationen können mitunter die für das jeweilige Filterelement geforderte Schmutzaufnahme und die entsprechend eingestellte Feinheit beeinträchtigt werden. Gegebenenfalls kann es zu einer Zerstörung des Filtermaterials kommen.

Um diesen Gefährdungen zu begegnen, ist es Stand der Technik, vergl. das Dokument US 2009/0218295 A1, mittels einer nachgiebigen Ausgleichseinrichtung auftretende Druckschwankungen zu glätten. Bei dieser bekannten Lösung ermöglicht die Nachgiebigkeit der Ausgleichseinrichtung Änderungen des Volumens, das sich innerhalb eines ein betreffendes Filterelement aufnehmenden Filtergehäuses befindet. Die bekannte Lösung ist unter anderem zumindest insofern nicht zufriedenstellend, als für die Ausgleichseinrichtung innerhalb des Filtergehäuses ein verhältnismäßig großer Bauraum erforderlich ist, so dass keine kompakte Bauweise verwirklichbar ist.

Die DE 10 2010 061 222 A1 beschreibt eine Filtervorrichtung mit mindestens einem von einem abzureinigenden Fluid mit vorgebbarem Fluidbetriebsdruck durchströmbaren, in einem Gehäuse aufnehmbaren Filterelement, wobei der am jeweiligen Filterelement herrschende Fluiddruck das jeweilige Filterelement, insbesondere dessen Filtermaterial, schädigende Druckspitzen oder generelle Druckerhöhungen aufweisen kann, die mittels einer auf das jeweilige Filterelement direkt einwirkenden Ausgleichseinrichtung reduzierbar und/oder glättbar sind, die mindestens ein nachgiebiges Ausgleichselement aufweist, das entsprechend einer Druckspitze oder Druckerhöhung eine Vergrößerung des Volumens des Fluidraums des Gehäuses ermöglicht, wobei das nachgiebige Ausgleichselement zwischen der Außenseite des Filtermaterials des Filterelements und der benachbarten Innenwand des Gehäuses angeordnet ist, wobei das nachgiebige Ausgleichselement durch eine zumindest teilweise Ummantelung der Außenseite des jeweiligen, im Gehäuse befindlichen Filterelements gebildet ist, wobei die Ummantelung die Form eines kreiszylindrischen Topfes besitzt.

Weitere Filtervorrichtungen gehen aus der WO 2013/178352 A1, der WO 2013/178336 A1, der EP 1 360 983 A1, der WO 2010/139706 A1, der US 2005/0161394 A1, der DE 2 121 533, der DE 10 2006 003 551 A1, der EP 2 228 113 A1, der WO 2012/007337 A1, der US 2012/0248024 A1 und der DE 29 15 730 A1 hervor. Die DE 10 2009 009 899 A1 betrifft ein Kraftfahrzeug mit einer eine selektive katalytische Reduktion ermöglichenden Abgasanlage.

Ausgehend von diesem Stand der Technik stellt sich die Erfindung die Aufgabe, eine Filtervorrichtung zur Verfügung zu stellen, die den zu stellenden Anforderungen besser gerecht wird, insbesondere eine kompakte Bauweise ermöglicht.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 bestehen wesentliche Besonderheiten der Erfindung darin, dass der Topf innenseitig an einem fluiddurchlässigen Stützrohr anliegt und dass das Stützrohr seinerseits an der Außenseite des Filtermaterials des betreffenden Filterelements als dessen äußeres Stützrohr anliegt. Bei einer Druckerhöhung oder Druckspitze im inneren Fluidraum des Filterelements erfolgt eine Vergrößerung des Volumens durch Komprimieren der Ummantelung durch den am äußeren Stützrohr anstehenden Druck.

Es ist ferner vorgesehen, dass das nachgiebige Ausgleichselement zwischen der Außenseite des Filtermaterials des Filterelements und der benachbarten Innenwand des Gehäuses angeordnet ist. Im Gegensatz zu der genannten, bekannten Lösung, bei der die Ausgangseinrichtung sich als axiale Verlängerung an ein Ende des Filterelements anschließt, ermöglicht es die Erfindung, die Filtervorrichtung derart auszubilden, dass die Baulänge des Gehäuses die Baulänge des Filterelements nicht wesentlich übersteigt.

Mit besonderem Vorteil kann eine derartige Ummantelung durch einen Körper vorgegebener Kompressibilität gebildet sein, wobei es sich vorzugsweise um einen porösen, geschlossene Poren aufweisenden Stoff, beispielsweise einen Schaumstoff, handeln kann. Bei einer besonders vorteilhaften Ausführungsform ist eine Ummantelung aus Moosgummi, vorzugsweise einem Ethylen-Propylen-Dien-Kautschuk (EPDM), vorgesehen. Eine derartige Ummantelung bietet ein besonders günstiges Verhältnis zwischen unbelasteter Volumengröße und komprimierter Volumengröße.

Bei besonders vorteilhaften Ausführungsbeispielen, mit einem Filterelement, das ein einen hohlzylindrischen, inneren Filterhohlraum umgebendes Filtermaterial aufweist, das endseits von einer den Eingang und den Ausgang des Fluidraums bildenden Endkappe eingefasst ist, ist die Anordnung mit besonderem Vorteil so getroffen, dass die Ummantelung, die Endkappe zumindest teilweise freilassend, das Filterelement vollständig umfasst. Bei einem Mindestmaß an für die Ausgleichseinrichtung erforderlichem zusätzlichem Bauraum ist dadurch eine optimale Ausgleichswirkung erzielbar.

Bei besonders vorteilhaften Ausführungsbeispielen ist die Anordnung so getroffen, dass die Außenseite des Topfes der Ummantelung an der Innenseite des Gehäuses anliegt, beim Zustand fehlenden Fluidbetriebsdrucks jedoch als Einheit zusammen mit dem Filterelement aus dem Gehäuse herausnehmbar ist. Dadurch, dass der Topf zusammen mit dem Filterelement für Auswechselvorgänge aus dem Gehäuse herausnehmbar ist, ergibt sich der zusätzliche bedeutsame Vorteil, dass Filterelementwechsel bequem, sauber und umweltschonend durchgeführt werden können, weil beim Herausnehmen des Filterelements Fluidrückstände und Abscheidungen mit dem Topf der Ummantelung herausgenommen werden und dadurch weder das Gehäuse noch die Umwelt bei der Handhabung verbrauchter Filterelemente gefährdet werden.

Ein weiterer, besonderer Vorteil der Erfindung besteht darin, dass die Ausgleichseinrichtung außer der Dämpfung von Druckpulsationen einen Gefrierschutz für die Filtervorrichtung bildet. Dies ist bedeutsam, wenn es sich um Fluide in Form gefrierbarer Substanzen handelt. Dies ist beispielsweise bei in der Fahrzeugtechnik eingesetzten Systemen der Fall, die in der Fachsprache als Adblue-Systeme bezeichnet sind. Bei diesen Systemen werden für die Abgasbehandlung bei Verbrennungsmotoren wässrige Harnstofflösungen über eine Zuführeinrichtung von einem Vorratstank dosiert dem Abgasstrom zugeführt, wobei aus dem Harnstoff durch Hydrolyse Ammoniak gewonnen wird. Dieses wirkt im Abgasstrom als selektives Reduktionsmittel. Um den Wirkungsgrad der Reduktion zu optimieren, wird die wässrige Harnstofflösung dem Abgasstrom mittels einer durch ein Steuergerät lastabhängig gesteuerten Pumpe dosiert zugeführt. Bei durch eine Kolbenpumpe zugeführter Harnstofflösung, die systembedingt mit Druckpulsationen behaftet ist, wirkt die Ausgleichseinrichtung zum einen glättend. Zum anderen verhindert die Ausgleichseinrichtung, als Gefrierschutz, dass es bei Frosttemperaturen und dadurch bedingtem Gefrieren der wässrigen Harnstofflösung aufgrund der Volumenvergrößerung beim Gefriervorgang zu einem Bersten von Wandungen der Filtervorrichtung kommen kann oder insbesondere eine Schädigung oder Zerstörung eines betreffenden Filterelements eintritt, weil die Ausgleichseinrichtung eine beim Gefrieren erfolgende Volumenvergrößerung kompensiert.

Gemäß dem Patentanspruch 7 ist Gegenstand der Erfindung auch ein Filterelement, das insbesondere zur Benutzung bei einer Filtervorrichtung nach einem der Patentansprüche 1 bis 6 vorgesehen ist.

Nachstehend ist die Erfindung anhand eines in der Zeichnung dargestellten Ausführungsbeispiels im Einzelnen erläutert. Es zeigen:
- Fig. 1: eine perspektivische Schrägansicht eines Ausführungsbeispiels der erfindungsgemäßen Filtervorrichtung, gesehen auf die Endkappe eines zugehörigen Filterelements;
- Fig. 2: eine perspektivische Schrägansicht lediglich des Filterelements des Ausführungsbeispiels, wiederum gesehen auf dessen Endkappe und mit teilweise aufgeschnittener Ummantelung, so dass ein Teil der Außenseite des Filtermaterials des Filterelements sichtbar ist;
- Fig. 3: einen Längsschnitt des in Fig. 2 gezeigten Filterelements;
- Fig. 4: einen Längsschnitt des Ausführungsbeispiels der Filtervorrichtung, wobei das Filterelement von Fig. 2 und 3 im zugehörigen Filtergehäuse aufgenommen ist; und

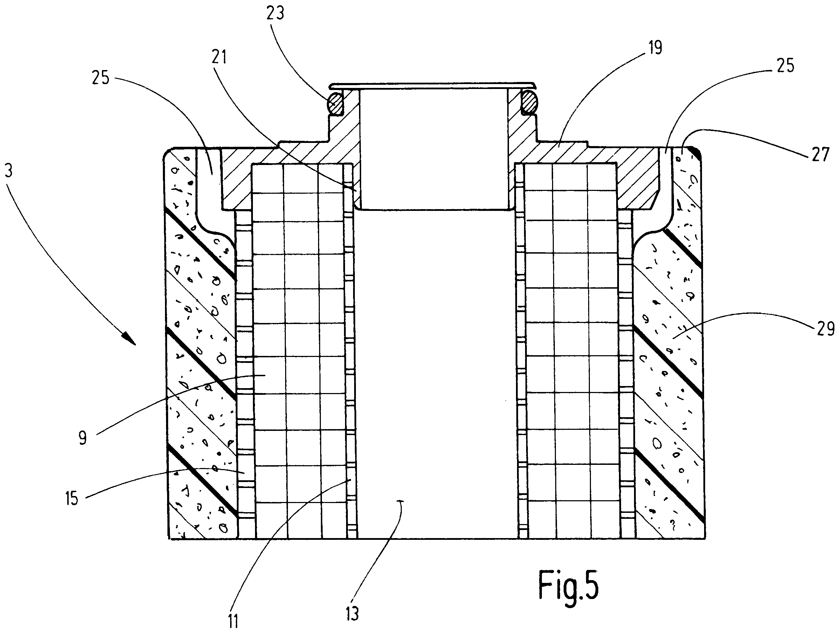

- Fig. 5: einen gegenüber Fig. 3 vergrößert gezeichneten Teillängsschnitt lediglich des einer Endkappe benachbarten Bereichs des Filterelements.

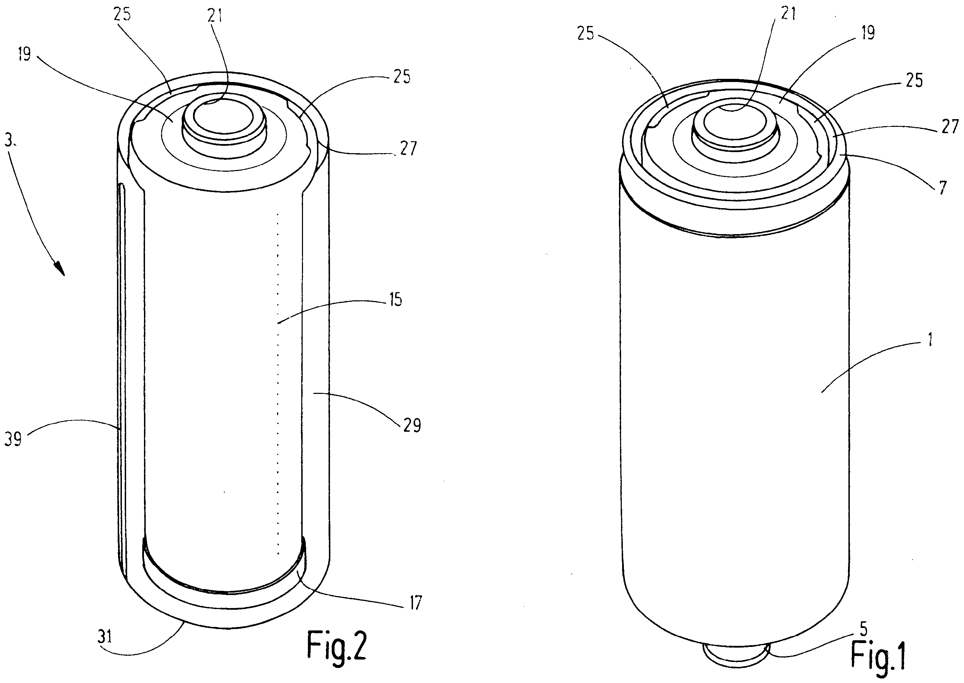

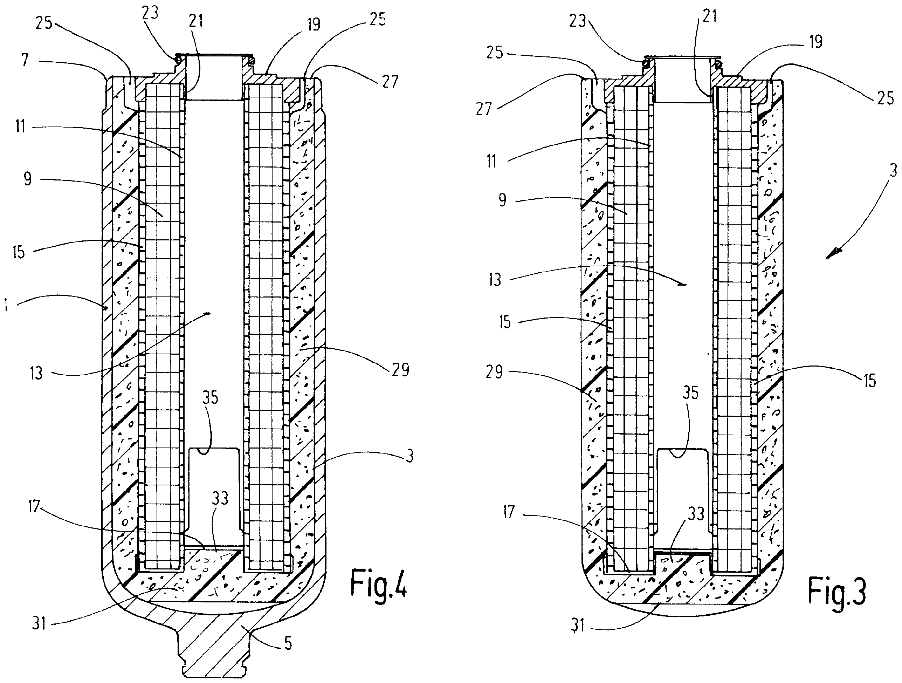

Das in Fig. 1 und 4, in letzterer in Schnittdarstellung, als Ganzes gezeigte Ausführungsbeispiel der erfindungsgemäßen Filtervorrichtung weist ein Filtergehäuse 1 auf, das zur Aufnahme eines Filterelements 3 vorgesehen ist, das in Fig. 2 und 3, in letzterer in Schnittdarstellung, gesondert gezeigt ist. Das Filtergehäuse 1 aus Kunststoff oder einem metallischen Werkstoff hat die Form eines am Boden 5 geschlossenen Hohlzylinders, der am gegenüberliegenden, oberen Ende 7 offen ist. Das vom offenen Ende 7 her in das Filtergehäuse 1 einsetzbare Filterelement 3, das in der Art einer sog. Filterpatrone ausgebildet ist, weist ein Filtermaterial 9 in Form einer plissierten Filtermatte auf, die in der bei derartigen Filterpatronen üblichen Weise ein fluiddurchlässiges Stützrohr 11, vorzugsweise aus Kunststoff, umgibt, innerhalb dessen sich ein innerer Filterhohlraum 13 befindet. An der Außenseite des Filtermaterials 9 befindet sich ein zweites, äußeres, fluiddurchlässiges Stützrohr 15. An dem in der Zeichnung unteren Ende ist das Filtermaterial 9 von einer geschlossenen Endkappe 17 eingefasst. Am anderen Ende des Filtermaterials 9 befindet sich eine Endkappe 19, an der der Anschluss an einem zugeordneten Filterkopf erfolgt, der nicht gezeigt ist und über den die Zufuhr eines abzureinigenden Fluids sowie die Abgabe abgereinigten Fluids erfolgt. Die Endkappe 19, die wie die geschlossene Endkappe 17 aus einem Kunststoffwerkstoff einstückig spritzgeformt ist, weist für die Fluidverbindung zum inneren Filterhohlraum 13 einen Anschlussstutzen 21 auf, an dem sich für die Abdichtung am Filterkopf ein O-Ring 23 befindet.

Wie am besten aus Fig. 1 und 2 zu ersehen ist, ist die Endkappe 19 im Umriss nicht vollständig kreisrund, sondern weist Ausnehmungen auf, die sich in Radialrichtung einwärts erstrecken. Dadurch sind am Umfang der Endkappe 19 Ringspalte 25 zwischen der Endkappe 19 und dem Rand 27 einer die Endkappe 19 umfassenden Ummantelung gebildet. Diese hat die Form eines Topfes 29, der sich von seinem offenen Rand 27, einen Kreiszylinder bildend, zu einem geschlossenen Bodenteil 31 erstreckt. Bei der Funktionsposition, bei welcher der Topf 29 im Filtergehäuse 1 aufgenommen ist, befindet sich, siehe Fig. 4, das Bodenteil 31 des Topfes 29 am Boden 5 des Gehäuses 1. Die Spalte 25 bilden, wie der Stutzen 21, vom nicht gezeigten Filterkopf her die Fluidverbindung zum inneren Fluidraum des Filterelements 3, wobei die Richtung der Durchströmung beim Filtrationsvorgang so vorgesehen sein kann, dass das abzureinigende Fluid über die Spalte 25 einströmt, sich entlang des äußeren Stützrohres 15 verteilt und nach Durchströmen des Filtermaterials 9 über den Stutzen 21 der Endkappe 19 austritt.

Der am Bodenteil 31 geschlossene Topf 29, der eine Ummantelung bildet, die das Filterelement 3 bis auf die obere Endkappe 19 vollständig umgibt, ist aus einem kompressiblen Material gebildet. In der Funktionsposition, wobei das Filterelement 3 im Gehäuse 1 derart aufgenommen ist, siehe Fig. 4, dass der die Ummantelung bildende Topf 29 mit glattflächiger Außenseite an der ebenfalls glattflächigen Innenwand des Gehäuses 1 anliegt, bildet der Topf 29 aufgrund seiner Nachgiebigkeit eine wirksame Ausgleichseinrichtung, indem durch druckbedingtes Komprimieren des Werkstoffs des Topfes 29 eine Vergrößerung des Volumens des Fluidraums im Filterelement 3 stattfindet, die Druckerhöhungen entgegenwirkt oder Druckspitzen glättet. Als Werkstoffe für den Topf 29, die für ein Zusammendrücken gegen die Innenwand des Gehäuses 1 geeignet sind, kommen vorzugsweise poröse kompressible Materialien mit geschlossenen Poren in Frage. Beim vorliegenden Ausführungsbeispiel ist der als Ummantelung dienende Topf 29 aus einem Moosgummi, vorzugsweise einem Ethylen-Propylen-Dien-Kautschuk (EPDM) ausgebildet. Wie Fig. 3 und 4 zeigen, ist der Topf 29 ein einteiliges Bauteil mit einem vom Bodenteil 31 axial nach innen vorspringenden Höcker 33 als Zentrierstück für die geschlossene untere Endkappe 17. Von letzterer ausgehend erstreckt sich ein Stabilisierkörper 35 in den inneren Filterhohlraum 13.

Wie bereits erwähnt, sind Außenseite des die Ummantelung bildenden Topfes 29 und Innenwand des Filtergehäuses 1 glattflächig. Die Dimensionierung von Filterelement 3 und Gehäuse 1 ist so bemessen, dass das Filterelement 3 vom offenen Ende 7 des Gehäuses 1 her in dieses einsetzbar ist. Um leichtes Einsetzen und Herausnehmen zu ermöglichen, sind in der Außenseite des Topfes 29, als Unterbrechung der ansonsten glatten Außenfläche, drei in Winkelabständen von 120° zueinander versetzte, vertiefte Längsrillen 39 ausgebildet, von denen lediglich eine in Fig. 2 sichtbar ist. Diese Längsrillen 39 ermöglichen einen entsprechenden Druckausgleich beim Einschieben des Filterelements 3 in das Gehäuse 1 und beim Herausnehmen des Filterelements 3 aus dem Gehäuse 1 für Filterelementwechsel. Dank der Ummantelung, die durch einen am Bodenteil 31 geschlossenen Topf 29 gebildet ist, verbleiben beim Herausnehmen eines auszuwechselnden Filterelements 3 Restfluide und abgeschiedene Substanzen innerhalb des Topfes 29, der somit als Auffangbehälter für verschmutzte Medien dient. Eine Verschmutzung des Gehäuses bei Wechselvorgängen ist dadurch vermieden. Auch beim Filtrationsvorgang ist eine Kontaktierung der Wand des Gehäuses 1 durch Betriebsfluide dadurch verhindert, dass der Topf 29 durch den beim Filtrationsvorgang herrschenden Systemdruck an die Innenwand des Gehäuses 1 angedrückt wird.

## Patentansprüche

1. Filtervorrichtung mit mindestens einem von einem abzureinigenden Fluid mit vorgebbarem Fluidbetriebsdruck durchströmbaren, in einem Gehäuse (1) aufnehmbaren Filterelement (3), wobei der am jeweiligen Filterelement (3) herrschende Fluiddruck das jeweilige Filterelement (3), insbesondere dessen Filtermaterial (9), schädigende Druckspitzen oder generelle Druckerhöhungen aufweisen kann, die mittels einer auf das jeweilige Filterelement (3) direkt einwirkenden Ausgleichseinrichtung reduzierbar und/oder glättbar sind, die mindestens ein nachgiebiges Ausgleichselement (29) aufweist, das entsprechend einer Druckspitze oder Druckerhöhung eine Vergrößerung des Volumens des Fluidraums des Gehäuses (1) ermöglicht, wobei das nachgiebige Ausgleichselement (29) zwischen der Außenseite des Filtermaterials (9) des Filterelements (3) und der benachbarten Innenwand des Gehäuses (1) angeordnet ist, wobei das nachgiebige Ausgleichselement durch eine zumindest teilweise Ummantelung (29) der Außenseite des jeweiligen, im Gehäuse (1) befindlichen Filterelements (3) gebildet ist, wobei die Ummantelung die Form eines kreiszylindrischen Topfes (29) besitzt, **dadurch gekennzeichnet, dass** der Topf (29) innenseitig an einem fluiddurchlässigen Stützrohr (15) anliegt und dass das Stützrohr (15) seinerseits an der Außenseite des Filtermaterials (9) des betreffenden Filterelements (3) als dessen äußeres Stützrohr (15) anliegt.

2. Filtervorrichtung nach Anspruch 1, **dadurch gekennzeichnet, dass** eine Ummantelung (29) durch einen Körper vorgegebener Kompressibilität gebildet ist.

3. Filtervorrichtung nach einem der vorstehenden Ansprüche, **dadurch gekennzeichnet, dass** eine Ummantelung (29) aus einem porösen, geschlossene Poren aufweisenden Stoff, wie einem Schaumstoff, vorgesehen ist.

4. Filtervorrichtung nach einem der vorstehenden Ansprüche, **dadurch gekennzeichnet, dass** eine Ummantelung (29) aus Moosgummi, vorzugsweise einem Ethylen-Propylen-Dien-Kautschuk (EPDM), vorgesehen ist.

5. Filtervorrichtung nach einem der vorstehenden Ansprüche, **dadurch gekennzeichnet, dass** ein Filterelement (3) mit einem einen hohlzylindrischen, inneren Filterhohlraum umgebenden Filtermaterial (9) vorgesehen ist, das endseits von einer den Eingang (25) und den Ausgang (21) des Fluidraums bildenden Endkappe (19) eingefasst ist, und dass die Ummantelung (29), die Endkappe (19) zumindest teilweise freilassend, das Filterelement (3) vollständig umfasst.

6. Filtervorrichtung nach einem der vorstehenden Ansprüche, **dadurch gekennzeichnet, dass** die Außenseite des Topfes (29) der Ummantelung an der Innenseite des Gehäuses (1) anliegt, beim Zustand fehlenden Fluidbetriebsdrucks jedoch als Einheit zusammen mit dem Filterelement (3) aus dem Gehäuse (1) herausnehmbar ist.

7. Filterelement, insbesondere zur Benutzung bei einer Filtervorrichtung nach einem der Ansprüche 1 bis 6, mit einer die Außenseite des zugehörigen Filterelements (3) zumindest teilweise umgebenden Ummantelung (29) aus einem kompressiblen Material, wobei die Ummantelung die Form eines kreiszylindrischen Topfes (29) besitzt, **dadurch gekennzeichnet, dass** der Topf (29) innenseitig an einem fluiddurchlässigen Stützrohr (15) anliegt und dass das Stützrohr (15) seinerseits an der Außenseite eines Filtermaterials (9) des betreffenden Filterelements (3) als dessen äußeres Stützrohr (15) anliegt.

8. Filterelement nach Anspruch 7, **dadurch gekennzeichnet, dass** eine Ummantelung (29) aus einem porösen, geschlossene Poren aufweisenden Stoff, wie einem Schaumstoff, vorzugsweise aus Moosgummi, vorgesehen ist.

9. Filterelement nach Anspruch 7 oder 8, **dadurch gekennzeichnet, dass** es ein einen hohlzylindrischen, inneren Filterhohlraum (13) umgebendes Filtermaterial (9) aufweist, das endseitig von einer den Eingang (25) und den Ausgang (21) des Fluidraums bildenden Endkappe (19) eingefasst ist, und dass die Ummantelung (29), die Endkappe (19) zumindest teilweise freilassend, das Filterelement (3) vollständig umfasst.

## Claims

1. A filter device with at least one filter element (3), through which a fluid to be cleaned can flow at a predefinable fluid operating pressure, and which element can be accommodated in a housing (1), wherein the fluid pressure prevailing at the respective filter element (3) can have pressure peaks or general pressure increases which are damaging to the respective filter element (3), in particular to the filter material (9) thereof, which pressure peaks and increases can be reduced and/or levelled out by means of a compensation device acting directly on the respective filter element (3) and which has at least one flexible compensation element (29) which makes possible an increase in the volume of the fluid chamber of the housing (1) in accordance with a pressure peak or pressure increase, wherein the flexible compensation element (29) is arranged between the outside of the filter material (9) of the filter element (3) and the adjacent inner wall of the housing (1), wherein the flexible compensation element is formed by an at least partial casing (29) of the outside of the respective filter element (3) located in the housing (1), wherein the casing has the form of a circular-cylindrical bowl (29), **characterised in that** the inside of the bowl (29) rests against a fluid-permeable support tube (15), and that the support tube (15) in turn rests against the outside of the filter material (9) of the relevant filter element (3) as the outer support tube (15) thereof.

2. The filter device according to claim 1, **characterised in that** a casing (29) is formed by a body of predefined compressibility.

3. The filter device according to one of the preceding claims, **characterised in that** a casing (29) made out of a porous material having closed pores, such as a foam, is provided.

4. The filter device according to one of the preceding claims, **characterised in that** a casing (29) made out of foam rubber, preferably an ethylene propylene diene monomer rubber (EPDM), is provided.

5. The filter device according to one of the preceding claims, **characterised in that** a filter element (3) is provided with a filter material (9) encasing a hollow-cylindrical, inner filter cavity, which material is enclosed at the end by an end cap (19) forming the inlet (25) and the outlet (21) of the fluid chamber, and **in that** the casing (29) completely encompasses the filter element (3), leaving the end cap (19) at least partially free.

6. The filter device according to one of the preceding claims, **characterised in that** the outside of the bowl (29) of the casing rests against the inside of the housing (1), which can, however, be removed from the housing (1) together with the filter element (3) as a unit, if a state arises in which there is an absence of fluid operating pressure.

7. A filter element, in particular for use in a filter device according to claims 1 to 6, with a casing (29) made out of a compressible material, which at least partially encompasses the outside of the associated filter element (3), wherein the casing has the form of a circular-cylindrical bowl (29), **characterised in that** the inside of the bowl (29) rests against a fluid-permeable support tube (15), and that the support tube (15) in turn rests against the outside of a filter material (9) of the relevant filter element (3) as the outer support tube (15) thereof.

8. The filter element according to claim 7, **characterised in that** a casing (29) made out of a porous material having closed pores such as a foam, preferably foam rubber, is provided.

9. The filter element according to claim 7 or 8, **characterised in that** it has a filter material (9), which encases a hollow-cylindrical, inner filter cavity (13), which material is enclosed at the end by an end cap (19) forming the inlet (25) and the outlet (21) of the fluid chamber, and **in that** the casing (29) completely encompasses the filter element (3), leaving the end cap (19) at least partially free.

## Revendications

1. Système de filtration, comprenant au moins un élément (3) de filtre, qui peut être traversé par un fluide à épurer ayant une pression de fonctionnement pouvant être donnée à l'avance et qui peut être reçu dans une enveloppe (1), la pression du fluide régnant sur l'élément (3) de filtre pouvant avoir des pointes de pression ou d'une manière générale des élévations de pression endommageant l'élément (3) de filtre, notamment sa matière (9) filtrante, lesquelles peuvent être réduites et/ou lissées au moyen d'un dispositif de compensation, qui agit directement sur l'élément (3) de filtre et qui a au moins un élément (29) de compensation élastique, qui rend possible, en fonction d'une pointe de la pression ou d'une élévation de la pression, une augmentation du volume de l'espace réservé au fluide de l'enveloppe (1), l'élément (29) de compensation élastique étant disposé entre le côté extérieur de la matière (9) filtrante de l'élément (3) de filtre et la paroi intérieure voisine de l'enveloppe (1), l'élément de compensation élastique étant formé d'un gainage (29), au moins en partie du côté extérieur de l'élément (3) de filtre se trouvant dans l'enveloppe (1), le gainage ayant la forme d'un pot cylindrique de section circulaire, **caractérisé en ce que** le pot (29) s'applique du côté intérieur à un tube (15) support perméable au fluide et **en ce que** le tube (15) support s'applique, pour sa part, au côté extérieur de la matière (9) filtrante de l'élément (3) de filtre concerné, comme étant son tube (15) support extérieur.

2. Installation de filtration suivant la revendication 1, **caractérisé en ce qu'**un gainage (29) est formé d'un corps d'une compressibilité donnée à l'avance.

3. Installation de filtration suivant l'une des revendications précédentes, **caractérisé en ce qu'**un gainage (29) est en une matière poreuse à pores fermés, comme une matière mousse.

4. Installation de filtration suivant l'une des revendications précédentes, **caractérisée en ce qu'**il est prévu un gainage (29) en caoutchouc mousse, de préférence en un caoutchouc éthylène-propylène-diène (EPDM).

5. Installation de filtration suivant l'une des revendications précédentes, **caractérisée en ce qu'**il est prévu un élément (3) de filtre, ayant une matière (9) filtrante, entourant une cavité de filtre intérieure cylindrique creuse et enchâssée du côté de l'extrémité par une coiffe (19) d'extrémité formant l'entrée (25) et la sortie (21) de l'espace réservé au fluide et **en ce que** le gainage (29) entoure complètement l'élément (3) de filtre en laissant libre, au moins en partie, la coiffe (19) d'extrémité.

6. Installation de filtration suivant l'une des revendications précédentes, **caractérisé en ce que** le côté extérieur du pot (29) du gainage s'applique au côté intérieur de l'enveloppe (1), en pouvant toutefois, lorsqu'il n'y a pas de pression de fonctionnement du fluide, être retiré de l'enveloppe (1) sous la forme d'une unité ensemble avec l'élément (3) de filtre.

7. Elément de filtre, à utiliser notamment dans une installation de filtration suivant l'une des revendications 1 à 6, comprenant un gainage en une matière compressible, entourant au moins en partie le côté extérieur de l'élément (3) de filtre associé, le gainage ayant la forme d'un pot (29) cylindrique de section circulaire, **caractérisé en ce que** le pot (29) s'applique du côté intérieur à un tube (15) support perméable au fluide et **en ce que** le tube (15) support s'applique, pour sa part, au côté extérieur de la matière (9) filtrante de l'élément (3) de filtre concerné, comme étant son tube (15) support extérieur.

8. Elément de filtre suivant la revendication 7, **caractérisé en ce qu'**il est prévu un gainage (29) en une matière poreuse à pores fermés, comme une matière mousse, de préférence un caoutchouc mousse.

9. Elément de filtre suivant la revendication 7 ou 8, **caractérisé en ce qu'**il a une matière (9) filtrante, qui entoure une cavité (13) de filtre intérieure cylindrique creuse et qui est enchâssée du côté de l'extrémité par une coiffe (19) d'extrémité formant l'entrée (25) et la sortie (21) de l'espace réservé au fluide et **en ce que** le gainage (29) entoure complètement l'élément (3) de filtre en laissant libre, au moins en partie, la coiffe (19) d'extrémité.
